# EUROPEAN PATENT APPLICATION

(11) **EP 4 358 059 A1**
(43) Date of publication of application: **24.04.2024**
(21) Application number: 23198675.3
(22) Date of filing: 21.09.2023
(51) Int. Cl.: G08G 1/0967, G08G 1/00

(54) **COOPERATIVE DRIVING CONTROL METHOD BASED ON VEHICLE SECURITY STATUS**

(30) Priority: 20.10.2022 KR 20220135785
(71) Applicant: Korea Electronics Technology Institute, Seongnam-si, Gyeonggi-do 13509 (KR)
(72) Inventor: SHIN, Dae Kyo, 13567 Seongnam-si (KR); LIM, Ki Taeg, 16707 Suwon-si (KR); PARK, Pu Sik, 17005 Yongin-si (KR); JUNG, Han Gyun, 16821 Yongin-si (KR); YOON, Sang Hun, 13589 Seongnam-si (KR); JANG, Soo Hyun, 16825 Yongin-si (KR); JANG, Seong Hyun, 16843 Yongin-si (KR); JANG, Jun Hyek, 16002 Uiwang-si (KR); AN, Byoung Man, 13587 Seongnam-si (KR)
(74) Representative: Isarpatent

(57) **Abstract**

There is provided a cooperative driving control method based on a vehicle security status. The cooperative driving method according to an embodiment includes: identifying a security status of a cooperative driving target vehicle; determining a cooperative driving strategy according to the identified security status; and controlling driving according to the determined cooperative driving strategy. Accordingly, cooperative driving may be performed or excluded based on a security status of a target vehicle, so that an accident may be prevented from being caused by cooperative driving with a problematic vehicle, and safety of a driver and an occupant may be guaranteed.

## Description

### CROSS-REFERENCE TO RELATED APPLICATION(S) AND CLAIM OF PRIORITY

This application is based on and claims priority under 35 U.S.C. § 119 to Korean Patent Application No. 10-2022-0135785, filed on October 20, 2022, in the Korean Intellectual Property Office, the disclosure of which is herein incorporated by reference in its entirety.

### BACKGROUND

### FIELD

The disclosure relates to an autonomous driving technology, and more particularly, to a method for safely operating/controlling cooperative driving by sharing information and negotiating about driving in cooperation with other neighboring vehicles.

### DESCRIPTION OF RELATED ART

An autonomous driving vehicle of level 3 or higher performs autonomous driving through a sensor mounted therein and information such as a pre-given detailed map. However, such an autonomous driving vehicle should be able to share information in cooperation with other neighboring vehicles in order to perform a strategic task that may influence traffic flow.

Cooperative driving determines an optimal driving condition, a driving route based on information that is obtained by an ego vehicle and information that is provided by other neighboring vehicles.

Cooperative driving is mostly determined in an environment where an accident is highly likely to occur, for example, when a driver changes lanes, overtakes, avoids, intervenes, enters an intersection, or merges, and the determination of the cooperative driving may have a serious impact on safety of a driver and other vehicles.

### SUMMARY

The disclosure has been developed in order to solve the above-described problems, and an object of the disclosure is to provide a control method which performs or abstains from cooperative driving, which may incur a risk of a driver and an occupant, based on a security status of other vehicles.

According to an embodiment of the disclosure to achieve the above-described object, a cooperative driving control method may include: identifying a security status of a cooperative driving target vehicle; determining a cooperative driving strategy according to the identified security status; and controlling driving according to the determined cooperative driving strategy.

Determining may include changing a class of cooperative driving to perform according to the security status of the cooperative driving target vehicle. Determining may include abstaining from the cooperative driving according to the security status of the cooperative driving target vehicle.

Determining may include, when a class of the cooperative driving to perform with the cooperative driving target vehicle is a first class and the security status of the cooperative driving target vehicle is a first status indicating a best condition or a second status which is worse than the first state, determining the cooperative driving according to the first class. Determining may include: when the security status of the cooperative driving target vehicle is a third status which is worse than the second status, determining to abstain from the cooperative driving; and, when the security status of the cooperative driving target vehicle is a fourth status which is worse than the third status, abstaining from the cooperative driving and determining to perform alert driving.

Determining may include, when the class of the cooperative driving to perform with the cooperative driving target vehicle is a second class which requires more cooperation than the first class, and the security status of the cooperative driving target vehicle is the first status, determining to perform cooperative driving according to the second class. Determining may include: when the class of the cooperative driving to perform with the cooperative driving target vehicle is the second class which requires more cooperation than the first class, and the security status of the cooperative driving target vehicle is the second status, determining to perform cooperative driving according to the first class; when the security status of the cooperative driving target vehicle is the third status, determining to abstain from the cooperative driving; and, when the security status of the cooperative driving target vehicle is the fourth status, determining to abstain from the cooperative driving and to perform alert driving.

Determining may include: when the class of the cooperative driving to perform with the cooperative driving target vehicle is a third class which requires more cooperation than the second class, and the security status of the cooperative driving target vehicle is the first status, determining to perform the cooperative driving according to the third class; when the security status of the cooperative driving target vehicle is the second status, determining to perform cooperative driving according to the first class; and, when the security status of the cooperative driving target vehicle is the third status, determining to abstain from the cooperative driving; and, when the security status of the cooperative driving target vehicle is the fourth status, determining to abstain from the cooperative driving and to perform alert driving.

Determining may include: when the class of the cooperative driving to perform with the cooperative driving target vehicle is a fourth class which is required to cooperate according to an instruction of an emergency vehicle, and the security status of the cooperative driving target vehicle is the fourth status which is the worst status, determining to abstain from the cooperative driving and to perform alert driving; and, when the security status of the cooperative driving target vehicle is not the fourth status, determining to perform cooperative driving according to the fourth class.

According to another embodiment of the disclosure, a cooperative driving control system may include: a communication unit configured to communicate with a cooperative driving target vehicle; and a control unit configured to identify a security status of the cooperative driving target vehicle, to determine a cooperative driving strategy according to the identified security status, and to control driving according to the determined cooperative driving strategy.

According to still another embodiment of the disclosure, a cooperative driving control method may include: transmitting a security status of a vehicle to a cooperative driving target vehicle; identifying a security status of the cooperative driving target vehicle; and determining a cooperative driving strategy according to the identified security status.

According to embodiments of the disclosure as described above, cooperative driving may be performed or excluded based on a security status of a target vehicle, so that an accident may be prevented from being caused by cooperative driving with a problematic vehicle, and safety of a driver and an occupant may be guaranteed.

Other aspects, advantages, and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a view illustrating a table in which vehicles are classified for cooperative driving;
FIG. 2 is a view illustrating a cooperative driving method according to Class A;
FIG. 3 is a view illustrating an example of cooperative driving according to Class A;
FIG. 4 is a view illustrating a cooperative driving method according to Class B;
FIG. 5 is a view illustrating an example of cooperative driving according to Class B;
FIG. 6 is a view illustrating a cooperative driving method according to Class C;
FIG. 7 is a view illustrating an example of cooperative driving according to Class C;
FIG. 8 is a view illustrating a cooperative driving method according to Class D;
FIG. 9 is a view illustrating an example of cooperative driving according to Class D;
FIG. 10 is a view illustrating classification of vehicle internal network security statuses of a T-CDA vehicle which is a driving negotiation target vehicle in cooperative driving according to an embodiment of the disclosure;
FIG. 11 is a view illustrating an example of Class down;
FIG. 12 is a view illustrating an example of alert driving;
FIG. 13 is a view illustrating a cooperative driving method according to Class A based on a security status;
FIG. 14 is a view illustrating a cooperative driving method according to Class B based on a security status;
FIG. 15 is a view illustrating a cooperative driving method according to Class C based on a security status;
FIG. 16 is a view illustrating a cooperative driving method according to Class D based on a security status; and
FIG. 17 is a view illustrating a security status-based cooperative driving system according to another embodiment of the disclosure.

### DETAILED DESCRIPTION

Hereinafter, the disclosure will be described in more detail with reference to the accompanying drawings.

### 1. Summary

An autonomous driving vehicle performs autonomous driving through its own sensor and collected information. However, such an autonomous driving vehicle should be able to share information in cooperation with other neighboring vehicles in order to perform a strategic task that may influence traffic flow.

Cooperative driving in autonomous driving determines an optimal driving condition, a driving route based on information that is obtained by an ego vehicle and information that is provided by other neighboring vehicles.

Cooperative driving is mostly determined in an environment where an accident is highly likely to occur, for example, when a driver changes lanes, overtakes, avoids, intervenes, enters an intersection, or merges, and the determination of the cooperative driving may have a serious impact on safety of a driver and other vehicles.

Accordingly, embodiments of the disclosure provide a security status-based cooperative driving method. The method of the disclosure guarantees integrity of information provided by an ego vehicle and information provided by other vehicles, and enables safe cooperative driving by providing a security status of vehicle internal data such as network intrusion to the outside.

Specifically, the disclosure provides a method of changing an autonomous driving cooperation class, excluding from a cooperation target, or performing alert driving for an emergency vehicle or a dangerous vehicle, by informing an external vehicle of a security status of its own internal network and acquiring security statuses of other vehicles.

### 2. Classification of vehicles

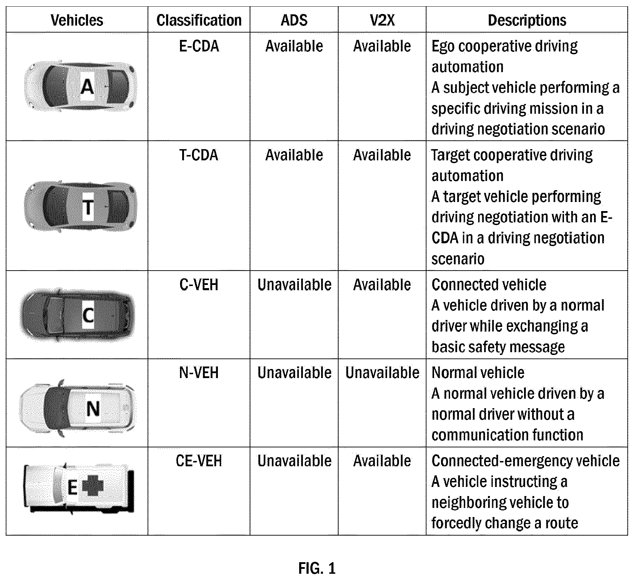

In a cooperative driving scenario, there exist various types of vehicles according to whether an autonomous driving system is mounted and whether there is a communication device. FIG. 1 shows a table in which vehicles are classified for cooperative driving. Vehicles are classified into five types of vehicles.

An ego cooperative driving automation (E-CDA) vehicle refers to a vehicle that is a subject of cooperative driving, and supports autonomous driving (automatic driving system (ADS) is available) and supports vehicle-to-everything (V2X) communication. A target cooperative driving automation (T-CDA) vehicle refers to a target (object) vehicle of cooperative driving, and supports autonomous driving (ADS is available) and supports V2X communication like the E-CDA vehicle.

A connected vehicle (C-VEH) refers to a vehicle that does not support autonomous driving (ADS is unavailable) and supports only V2X communication, and includes a vehicle that converts into manual driving of a driver among vehicles supporting autonomous driving, and is not a target vehicle of driving negotiation. A normal vehicle (N-VEH) is a vehicle that does not support autonomous driving and V2X communication, and is not a target vehicle of driving negotiation.

A connected-emergency vehicle (CE-VEH) is an emergency vehicle and may forcedly give a cooperative driving command through V2X communication.

### 3. Classification of cooperative driving

Cooperative driving may be classified into Class A, B, C, D according to a quantity and quality of information shared among vehicles.

### 3.1 Class A: Here I am and What I see

Class A is cooperative driving that cooperates by sharing recognized traffic environment information with an autonomous driving vehicle. Vehicles capable of performing V2X communication (for example, a T-CDA vehicle, a C-VEH, a CE-VEH) broadcast their own vehicle information (position, direction, steering angle, etc.) to neighboring vehicles, and an E-CDA vehicle performs cooperative driving based on received vehicle information.

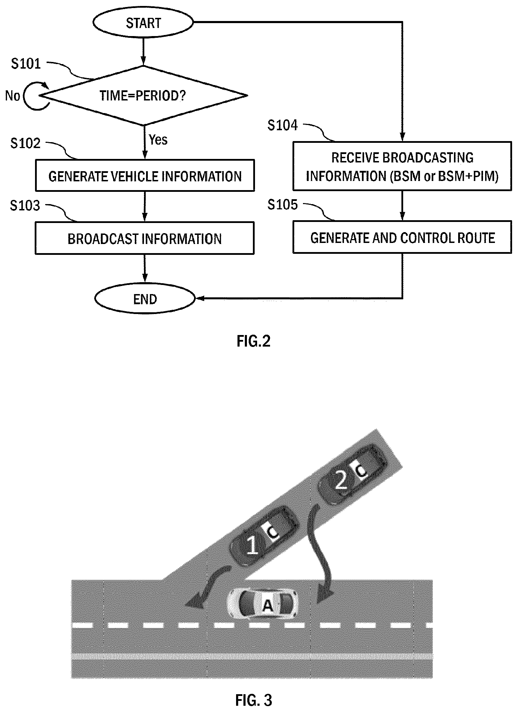

FIG. 2 is a view illustrating a cooperative driving method according to Class A. As shown in FIG. 2, a cooperative driving protocol according to Class A repeats periodically (S101). When neighboring vehicles capable of performing V2X communication (a T-CDA vehicle, a C-VEH, a CE-VEH) are detected, an E-CDA vehicle generates vehicle information and broadcasts the information to neighboring vehicles (S 102, S 103). In addition, when the E-CDA vehicle receives vehicle information broadcasted by a neighboring vehicle (S 104), the E-CDA vehicle tries to generate and control a route (S 105).

FIG. 3 illustrates an example of cooperative driving according to Class A. As shown in FIG. 3, two C-VEHs 1, 2 periodically broadcast their own vehicle information to neighboring vehicles, and an E-CDA vehicle A determines merging from a ramp road based on the received vehicle information.

### 3.2 Class B: This is what I plan to do

Class B is cooperative driving that cooperates by sharing a driving intention on a planned future behavior. When a T-CDA vehicle broadcasts its own driving intention (making a left turn, making a right turn, reversing, driving straight, making a U-turn) to neighboring vehicles, an E-CDA vehicle performs cooperative driving based on the received driving intention.

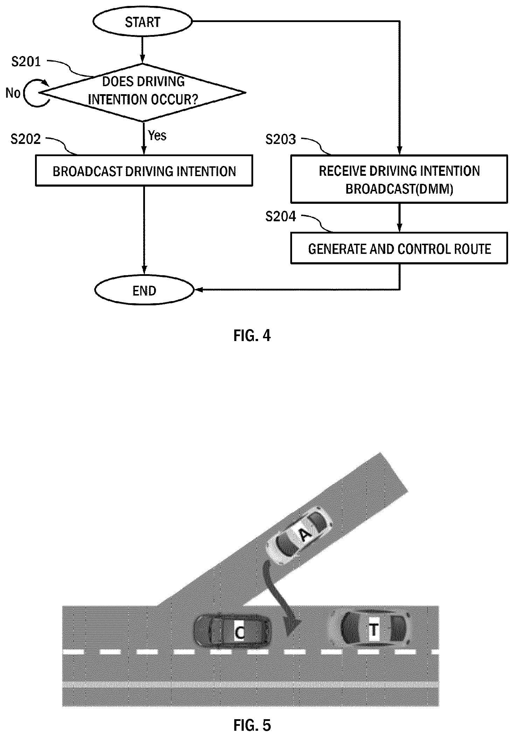

FIG. 4 is a view illustrating a cooperative driving method according to Class B. According to a cooperative diving protocol according to Class B as shown in FIG. 4, when an E-CDA vehicle predicts driving different from its current driving (for example, making a right/left turn, changing lanes, merging, and entering an intersection) (S201), the E-CDA vehicle broadcast its driving intention (S202). In addition, when the E-CDA vehicle receives a driving intention transmitted by a neighboring vehicle (S203), the E-CDA vehicle tries to generate and control a route based on the received intention (S204).

FIG. 5 illustrates an example of cooperative driving according to Class B. When a T-CDA vehicle T and a C-VEH C travel on a main road and an E-CDA vehicle A travels on a ramp road to merge onto the main road, the E-CDA vehicle A receives a driving status of the C-VEH C and a driving plan of the T-CDA T, and merges between the C-VEH C and the T-CDA vehicle T based on the received information.

### 3.3 Class C: Let's do this together

Class C is cooperative driving that agrees with a driving order through a series of cooperation messages between vehicles. An E-CDA vehicle having an initiative recognizes a T-CDA vehicle which is a negotiation target, and determines that it is necessary to negotiate about driving for the sake of safety driving, and then, suggests a driving priority and transmits the driving priority to the T-CDA vehicle through a driving negotiation message. The T-CDA vehicle receives the driving negotiation message and then replies an agreement message and travels according to the suggested driving order.

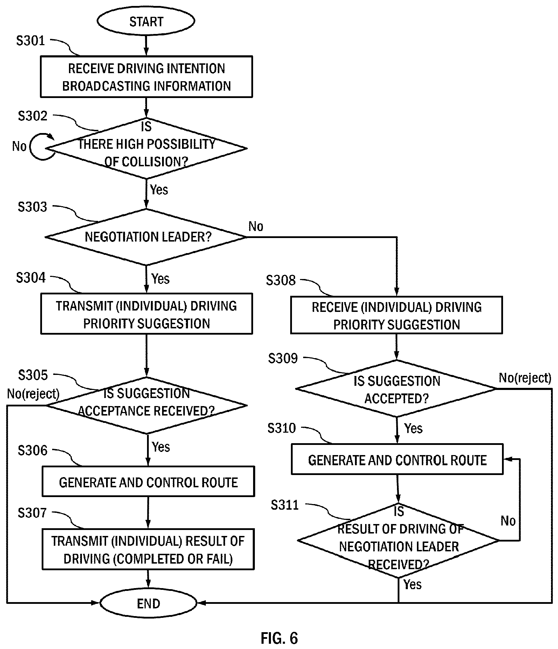

FIG. 6 is a view illustrating a cooperative driving method according to Class C. According to a cooperative driving protocol according to Class C as shown in FIG. 6, a vehicle proceeds after receiving driving intention messages of other vehicles (S301). When there is a high possibility of collision (S302), the vehicle determines whether it is a negotiation leader according to its current driving position (ramp road<main road, rotating<straight driving) (S303).

When an E-CDA vehicle is a negotiation leader (S303-Yes), the E-CDA vehicle suggests a driving negotiation priority (S304), and, when the suggestion is accepted (S305), the E-CDA vehicle proceeds with generation and control of a route (S306), and transmits a result of proceeding (S307).

On the other hand, when a T-CDA vehicle is a negotiation leader (S303-No), the E-CDA vehicle receives a driving negotiation priority suggestion, and transmits a message accepting or rejecting the suggestion (S309). When the suggestion is accepted (S309-Yes), the E-CDA vehicle proceeds with generation and control of a route according to the suggestion (S310).

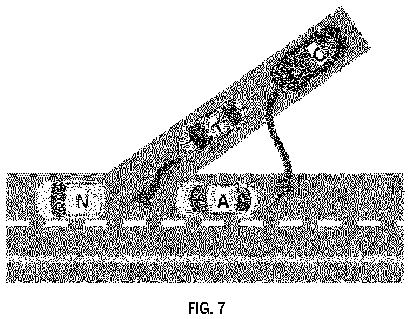

FIG. 7 is a view illustrating an example of cooperative driving according to Class C. When a T-CDA vehicle T and a C-VEH C travel on a ramp road and an N-HEV N and an E-CDA vehicle A travel on a main road as shown in FIG. 7, the E-CDA vehicle A shares a driving status of the C-VEH C and exchanges driving negotiation data with the T-CDA T. The E-CDA vehicle A traveling on the main road passes by a merge point based on the driving status and the driving negotiation information after the T-CDA vehicle T enters the main road behind the N-HEV N but before the C-HEV C enters the main road.

### 3.4 Class D: I will do as a security status is detected.

Class D is cooperative driving that is performed as a special vehicle (emergency vehicle) instructs neighboring vehicles to do behaviors. An emergency vehicle (for example, a fire engine) such as an CE-VEH induces other vehicles to yield by broadcasting its own emergency driving information (EDM) to neighboring vehicles.

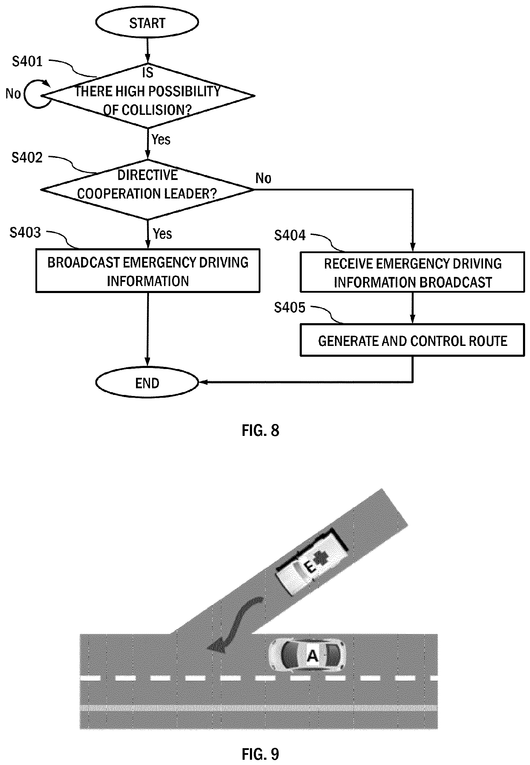

FIG. 8 is a view illustrating a cooperative driving method according to Class D. According to a cooperative driving protocol according to Class D as shown in FIG. 8, when there is a possibility that an emergency vehicle such as a CE-VEH collides with a T-CDA vehicle (S401-Yes and S402-Yes), the emergency vehicle tries to perform cooperative driving according to a situation (S403). In addition, when there is a possibility that the CE-VEH collides with a neighboring vehicle (401-Yes and S402-No), the CE-VEH broadcasts emergency driving information to the neighboring vehicle (S404) and induces generation and control of a route of the target vehicle (S405).

FIG. 9 is a view illustrating an example of cooperative driving according to Class D. When a CE-VEH E travels on a ramp road and an E-CDA vehicle A travels on a main road as shown in FIG. 9, the E-CDA vehicle A exchanges driving negotiation data with the CE-VEH E and yields to the CE-VEH E to merge onto the main road ahead according to an instruction of the CE-VEH E.

### 4. Classification of driving negotiation target vehicles

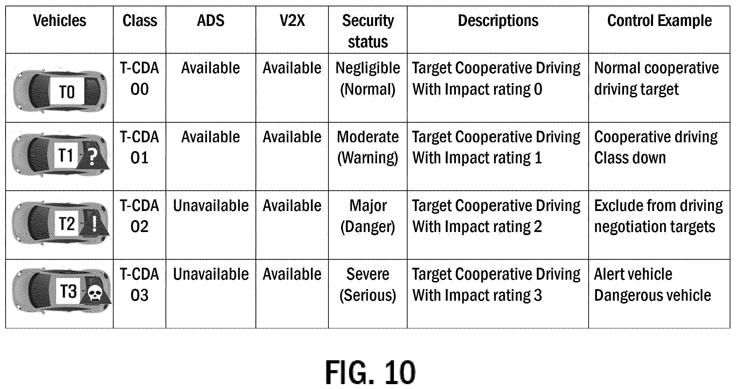

In an embodiment of the disclosure, a vehicle internal network security status of a T-CDA vehicle, which is a driving negotiation target vehicle of cooperating driving, is classified into four levels (ratings), Negligible (normal), Severe (serious), Major (danger), Moderate (warning) as shown in FIG. 10.

Negligible (normal) indicates a case in which a security status of a vehicle is normal or there is a risk that is negligible. Moderate (warming) indicates a security breach status in which a driver feels dissatisfaction regarding driving quality (user satisfaction negatively affected).

Major (danger) indicates a security breach status in which a driver feels significant annoyance in driving. Severe (serious) indicates a malfunction status in which a vehicle is inoperable or travels toward an unexpected place (vehicle not working or showing unexpected behavior of core functions such as enabling of limp home mode or autonomous driving to an unintended location).

### 5. Cooperative driving control method based on vehicle security status

### 5.1 Cooperative driving control method #1: Class down

When a security status of a T-CDA vehicle is Moderate (warning) and an E-CDA vehicle tries to perform cooperative driving according to Class B or Class C, the E-CDA vehicle lowers the class to perform cooperative driving according to Class A.

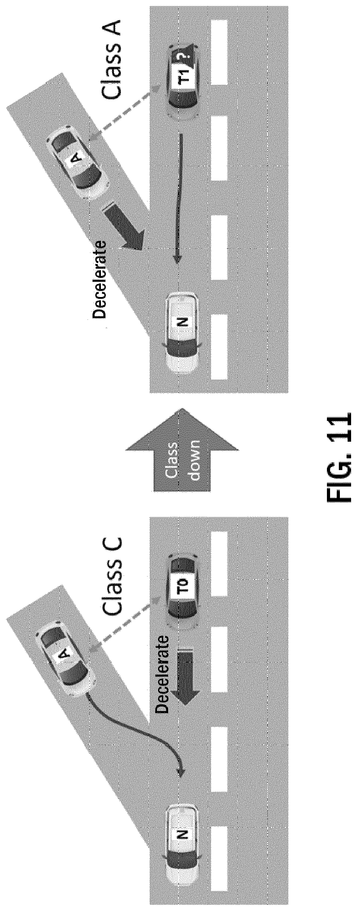

For example, as shown on the left drawing of FIG. 11, the E-CDA vehicle A enables cooperative driving according to Class C with the T-CDA vehicle which is in the Negligible (normal) status, but as shown on the right drawing, the E-CDA vehicle A enables only cooperative driving according to Class A with the T-CDA vehicle which is in the Moderate (warning) status.

### 5.2 Cooperative driving control method #2: Exclusion from a driving negotiation target

When a security status of a T-CDA vehicle is Major (danger), an E-CDA vehicle abstains from cooperative driving and regards the T-CDA vehicle as an N-VEH.

### 5.3 Cooperative driving control method #3: Perform alert driving

When a security status of a T-CDA vehicle is Severe (serious), an E-CDA vehicle performs alert driving or defensive driving to watch out for the corresponding vehicle.

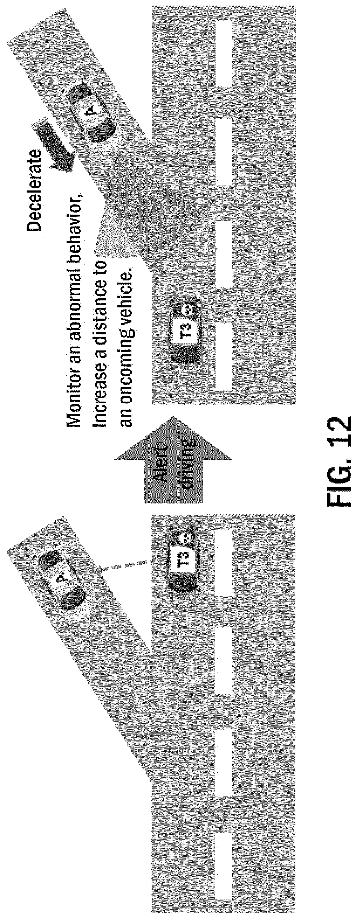

For example, as shown in FIG. 12, the E-CDA vehicle A does not perform cooperative driving with the T-CDA which is in the Severe (serious) status, and also, performs alert driving by increasing a distance to the oncoming vehicle.

### 6. Cooperative driving strategy based on a security status

### 6.1 Cooperative driving strategy according to Class A

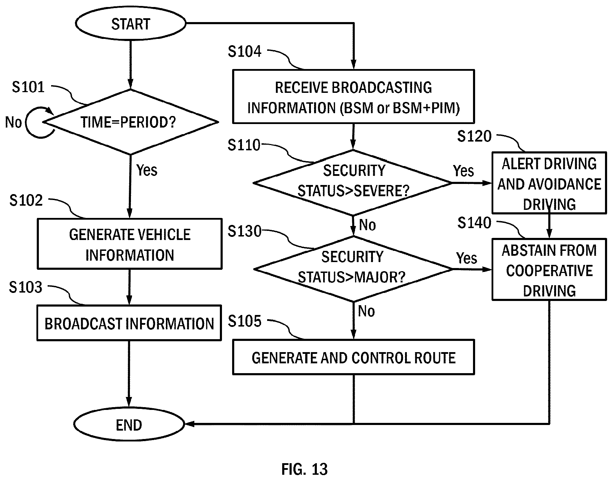

FIG. 13 is a flowchart provided to explain a cooperative driving method according to Class A based on a security status. Herein, `5.2 Exclusion from a driving negotiation target' and `5.3 Perform alert driving' are applied.

Specifically, when a security status of a T-CDA vehicle is Severe (serious) (S 110-Yes), an E-CDA vehicle performs alert driving and avoidance driving for the T-CDA (S 120). In addition, when the security status of the T-CDA vehicle is Major (danger) (S 130-Yes), the E-CDA vehicle abstains from negotiation driving with the T-CDA vehicle (S120).

On the other hand, when the security status of the T-CDA vehicle is Moderate (warning) or Negligible (normal) (S130-No), the E-CDA vehicle performs cooperative driving according to Class A (S105).

### 6.2 Cooperative driving strategy according to Class B

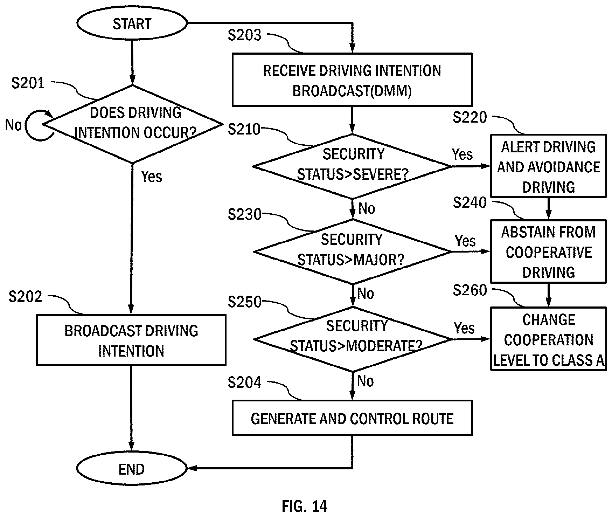

FIG. 14 is a flowchart provided to explain a cooperative driving method according to Class B based on a security status. Herein, `5.1 Class down', `5.2 Exclusion from a driving negotiation target' and `5.3 Perform alert driving' are applied.

Specifically, when a security status of a T-CDA vehicle is Severe (serious) (S210-Yes), an E-CDA vehicle performs alert driving and avoidance driving for the T-CDA (S220). In addition, when the security status of the T-CDA vehicle is Major (danger) (S230-Yes), the E-CDA vehicle abstains from negotiation driving with the T-CDA vehicle (S240).

On the other hand, when the security status of the T-CDA vehicle is Moderate (warning) (S250-Yes), the E-CDA vehicle reduces Class B to Class A and performs cooperative driving (S260). When the security status of the T-CDA vehicle is Negligible (normal) (S250-No), the E-CDA vehicle performs cooperative driving according to Class B (S204).

### 6.3 Cooperative driving strategy according to Class C

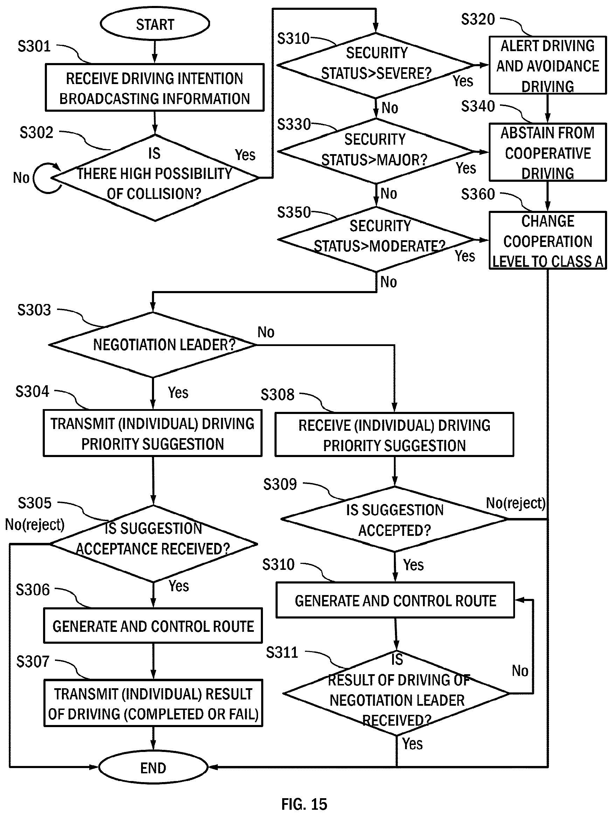

FIG. 15 is a flowchart provided to explain a cooperative driving method according to Class C based on a security status. Herein, `5.1 Class down', `5.2 Exclusion from a driving negotiation target' and `5.3 Perform alert driving' are applied.

Specifically, when a security status of a T-CDA vehicle is Severe (serious) (S310-Yes), an E-CDA vehicle performs alert driving and avoidance driving for the T-CDA (S320). In addition, when the security status of the T-CDA vehicle is Major (danger) (S330-Yes), the E-CDA vehicle abstains from negotiation driving with the T-CDA vehicle (S340).

On the other hand, when the security status of the T-CDA vehicle is Moderate (warning) (S350-Yes), the E-CDA vehicle reduces Class C to Class A and performs cooperative driving (S360). When the security status of the T-CDA vehicle is Negligible (normal) (S350-No), the E-CDA vehicle performs cooperative driving according to Class C (S303 to S311).

### 6.4 Cooperative driving strategy according to Class D

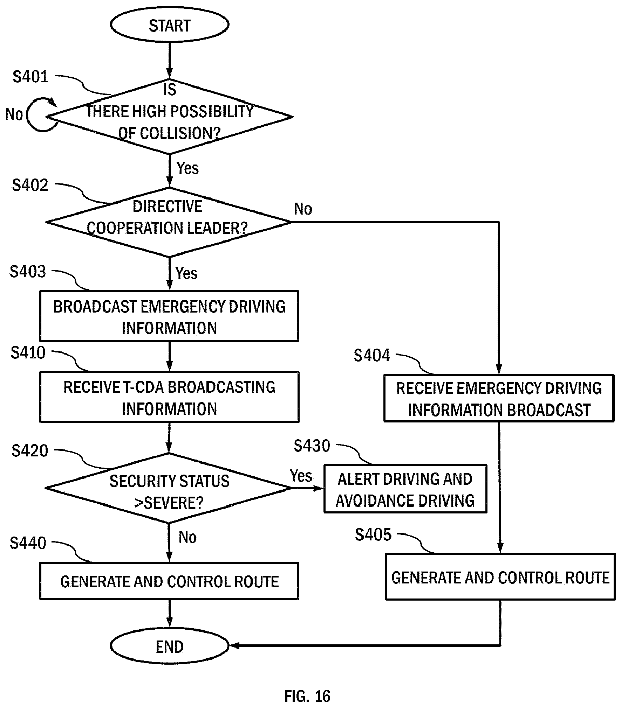

FIG. 16 is a flowchart provided to explain a cooperative driving method according to Class D based on a security status. Herein, `5.3 Perform alert driving' is applied.

Specifically, when broadcasting information received at step S410 indicates that a security status of a CE-VEH which is a driving negotiation target vehicle is Severe (serious) (S420-Yes), an E-CDA vehicle performs alert driving and avoidance driving for the CE-VEH (S430). In addition, when the security status of the CE-VEH is Major (danger), Moderate (warning), or Negligible (normal) (S420-No), the E-CDA vehicle performs cooperative driving according to Class D (S440).

### 7. Security status-based cooperative driving system

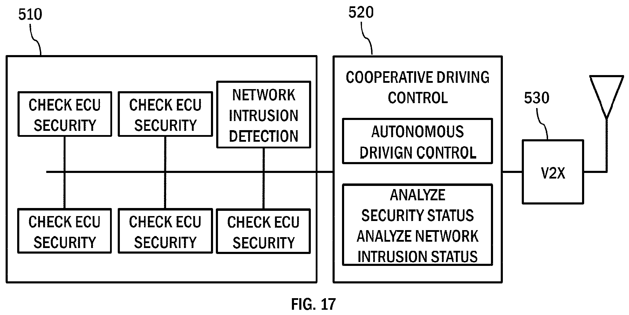

FIG. 17 is a block diagram of a security status-based cooperative driving system according to another embodiment of the disclosure. The cooperative driving system according to an embodiment may include a security checking unit 510, a driving control unit 520, and a communication unit 530.

The security checking unit 510 checks a security status of a vehicle by checking a security status of an electronic control unit (ECU) of an ego vehicle and detecting intrusion on a vehicle internal network connecting ECUs.

The driving control unit 520 transmits the security status of the vehicle which is checked by the security checking unit 510 to other neighboring vehicles through the communication unit 530. In addition, the driving control unit 520 identifies a security status based on vehicle information of a driving negotiation target vehicle which is received through the communication unit 530, and determines to perform or abstain from cooperative driving according to the identified security status. In addition, the driving control unit 520 controls driving by controlling the ECUs according to a determined cooperative driving strategy.

### 8. Modification example

Up to now, the vehicle security status-based cooperative driving control method has been described in detail with reference to preferred embodiments.

Embodiments of the disclosure propose a method of controlling cooperative driving of autonomous vehicles considering a security status of a driving negotiation target vehicle. In particular, embodiments propose a method of exchanging information on a vehicle security status and a safety status through vehicle communication for the sake of successful cooperative driving of an autonomous vehicle, and proceeding with/abstaining from/ignoring/alerting cooperative driving based on the exchanged information.

Accordingly, the rationale for supporting or excluding an autonomous driving service such as autonomous driving negotiation which may incur a risk of a driver and an occupant, based on a security status of an autonomous vehicle, may be provided and applied.

The technical concept of the present disclosure may be applied to a computer-readable recording medium which records a computer program for performing the functions of the apparatus and the method according to the present embodiments. In addition, the technical idea according to various embodiments of the present disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. A cooperative driving control method comprising:
identifying a security status of a cooperative driving target vehicle;
determining a cooperative driving strategy according to the identified security status; and
controlling driving according to the determined cooperative driving strategy.

2. The cooperative driving control method of claim 1, wherein determining comprises changing a class of cooperative driving to perform according to the security status of the cooperative driving target vehicle.

3. The cooperative driving control method of claim 2, wherein determining comprises abstaining from the cooperative driving according to the security status of the cooperative driving target vehicle.

4. The cooperative driving control method of claim 2, wherein determining comprises, when a class of the cooperative driving to perform with the cooperative driving target vehicle is a first class and the security status of the cooperative driving target vehicle is a first status indicating a best condition or a second status which is worse than the first state, determining the cooperative driving according to the first class.

5. The cooperative driving control method of claim 4, wherein determining comprises:
when the security status of the cooperative driving target vehicle is a third status which is worse than the second status, determining to abstain from the cooperative driving; and
when the security status of the cooperative driving target vehicle is a fourth status which is worse than the third status, abstaining from the cooperative driving and determining to perform alert driving.

6. The cooperative driving control method of claim 5, wherein determining comprises, when the class of the cooperative driving to perform with the cooperative driving target vehicle is a second class which requires more cooperation than the first class, and the security status of the cooperative driving target vehicle is the first status, determining to perform cooperative driving according to the second class.

7. The cooperative driving control method of claim 6, wherein determining comprises:
when the class of the cooperative driving to perform with the cooperative driving target vehicle is the second class which requires more cooperation than the first class, and the security status of the cooperative driving target vehicle is the second status, determining to perform cooperative driving according to the first class;
when the security status of the cooperative driving target vehicle is the third status, determining to abstain from the cooperative driving; and
when the security status of the cooperative driving target vehicle is the fourth status, determining to abstain from the cooperative driving and to perform alert driving.

8. The cooperative driving control method of claim 5, wherein determining comprises:
when the class of the cooperative driving to perform with the cooperative driving target vehicle is a third class which requires more cooperation than the second class, and the security status of the cooperative driving target vehicle is the first status, determining to perform the cooperative driving according to the third class;
when the security status of the cooperative driving target vehicle is the second status, determining to perform cooperative driving according to the first class; and
when the security status of the cooperative driving target vehicle is the third status, determining to abstain from the cooperative driving; and
when the security status of the cooperative driving target vehicle is the fourth status, determining to abstain from the cooperative driving and to perform alert driving.

9. The cooperative driving control method of claim 5, wherein determining comprises:
when the class of the cooperative driving to perform with the cooperative driving target vehicle is a fourth class which is required to cooperate according to an instruction of an emergency vehicle, and the security status of the cooperative driving target vehicle is the fourth status which is the worst status, determining to abstain from the cooperative driving and to perform alert driving; and
when the security status of the cooperative driving target vehicle is not the fourth status, determining to perform cooperative driving according to the fourth class.

10. A cooperative driving control system comprising:
a communication unit configured to communicate with a cooperative driving target vehicle; and
a control unit configured to identify a security status of the cooperative driving target vehicle, to determine a cooperative driving strategy according to the identified security status, and to control driving according to the determined cooperative driving strategy.

11. A cooperative driving control method comprising:
transmitting a security status of a vehicle to a cooperative driving target vehicle;
identifying a security status of the cooperative driving target vehicle; and
determining a cooperative driving strategy according to the identified security status.
